# EUROPÄISCHE PATENTSCHRIFT

(11) **EP 1 925 483 B1**
(45) Veröffentlichungstag und Bekanntmachung des Hinweises auf die Patenterteilung: **27.06.2012**
(21) Anmeldenummer: 07020269.2
(22) Anmeldetag: 17.10.2007
(51) Int. Cl.: B60J 7/12

(54) **Verdeck für ein Cabriolet**
Convertible top for a convertible
Capote pour un cabriolet

(30) Priorität: 23.11.2006 DE 102006055188
(43) Veröffentlichungstag der Anmeldung: 28.05.2008
(73) Patentinhaber: Dr. Ing. h.c. F. Porsche AG, 70435 Stuttgart (DE)
(72) Erfinder: Armbruster, Reiner, 75417 Muehlacker (DE)

(56) Entgegenhaltungen:
- EP-A- 0 855 302
- EP-A- 1 092 575
- EP-A- 1 752 326
- DE-A1- 3 834 490
- DE-C1- 3 903 680
- DE-U1- 20 114 000

## Beschreibung

Die vorliegende Erfindung betrifft ein Verdeck für ein Cabriolet, umfassend einen flexiblen Verdeckbezug gemäß dem Oberbegriff des Anspruchs 1. Die Erfindung betrifft außerdem ein mit einem derartigen Verdeck ausgestattetes Cabriolet.

Ein gattungsgemäßes Verdeck ist aus der DE 10 2004 011 856 A1 bekannt, wobei der Verdeckbezug in einer aufgespannten Lage zumindest in Fahrzeuglängsrichtung ausgerichtete Seitenbereiche sowie eine Verdeckmechanik aufweist, welche den Verdeckbezug bei geschlossenem Verdeck spannt und bei geöffnetem Verdeck in einer abgelegten Lage faltet. Um sicherzustellen, dass beim Öffnen des Verdecks insbesondere die Seitenbereiche des Verdeckbezugs zuverlässig und definiert gefaltet werden, sind in Abschnitten der Seitenbereiche flächige Aussteifungselemente vorgesehen, welche bei geöffnetem Verdeck eine zwischen den Aussteifungselementen gelegene Falte erzwingen. Das bekannte Verdeck weist jedoch den Nachteil auf, dass sich beim Öffnen des Verdecks scharfe Knickstellen bilden, welche einerseits den ästhetischen Eindruck des Verdecks in geschlossenem Zustand beeinträchtigen und andererseits eine schnelle Alterung des Verdeckbezugs bewirken.

Um die Knickschärfe innerhalb der Faltung des Verdeckbezuges zu begrenzen, also die Gewährleistung eines Mindestradiuses zu erreichen, ist ein faltbares Cabrioletverdeck aus der DE 297 07 036 U1 bekannt, welches Faltungsbegrenzer in Form von parallel zu einer vertikalen Fahrzeuglängsmittelebene verlaufenden Gurte aufweist, die bei abgelegtem Verdeck statt einer scharfen Faltungskante eine ausgerundete Faltung des Verdecks erzwingen. Nachteilig ist hierbei jedoch, dass die seitlich eines Heckfensters verlaufenden Faltungsbegrenzer von innen sichtbar angeordnet sind.

Weitere Verdecke mit insbesondere partieller Aussteifung eines Verdeckbezugs sind beispielsweise aus der DE 39 07 229 C1, aus der DE 197 04 173 C1, aus der DE 199 49 888 A1 sowie aus der DE 42 18 380 C1 bekannt.

Die vorliegende Erfindung beschäftigt sich mit dem Problem, für ein Verdeck der gattungsgemäßen Art eine verbesserte oder zumindest eine andere Ausführungsform anzugeben, die sich insbesondere durch eine gesteigerte Lebensdauer des Verdeckbezugs auszeichnet.

Erfindungsgemäß wird dieses Problem durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, in einem Seitenbereich eines zu öffnenden Cabrioletverdecks jeweils zumindest ein Aussteifungselement anzuordnen, welches bei geöffnetem Verdeck gefaltet ist und dadurch einen Mindestradius einer Falte des Verdeckbezugs gewährleistet. Die Gewährleistung eines derartigen Mindestradius begrenzt zugleich die Knickschärfe der Falten bei geöffnetem Verdeck, wodurch sich die Langlebigkeit des Verdeckbezugs beeinträchtigte Knickstellen gar nicht erst bilden können. Durch Vermeidung derartiger Knickstellen verbessert sich zudem der ästhetische Eindruck des Verdeckbezugs in geschlossenem Zustand, da sich bei herkömmlichem Verdecken diese Knickstellen im Laufe der Zeit deutlich abzeichnen. Das wenigstens eine Aussteifungselement ist dabei jeweils in einem Faltbereich eines in Fahrzeuglängsrichtung ausgerichteten Seitenbereichs angeordnet und weist eine flächige Gestalt auf, welche die Falte bei geöffnetem Verdeck überdeckt. Zusätzlich besitzt das Verdeck eine Verdeckmechanik, welche den Verdeckbezug in bekannter Weise bei geschlossenem Verdeck spannt und bei geöffnetem Verdeck faltet. Die flächigen Aussteifungselemente bewirken somit einerseits eine Knickschärfenbegrenzung und dadurch einen gewissen Mindestradius, welcher andererseits dazu führt, dass die mechanische Belastung des Verdeckbezugs beim Öffnen und Schließen deutlich reduziert werden kann, wodurch sich die Langlebigkeit des Verdecks erhöht.

Zweckmäßig verläuft eine Haupterstreckung des wenigstens einen Aussteifungselementes in Fahrzeuglängsrichtung. Dies bewirkt, dass das Aussteifungselement bei geöffnetem Verdeck die Falten überdeckt und dadurch deren Knickschärfe begrenzt. Im Unterschied zu in Fahrzeugquerrichtung verlaufenden Aussteifungselementen, bei welchen die Faltenbildung üblicherweise im biegeschlaffen Bereich zwischen den Aussteifungselementen erfolgt, kann durch die erfindungsgemäßen in Fahrzeuglängsrichtung orientierten Aussteifungselemente ein gewisser Mindestradius bei der Faltenbildung gewährleistet werden, der zumindest so groß ist, dass sich auch nach langer Zeit keine Knickkanten im Verdeckbezug abzeichnen. Dies sorgt einerseits für einen ästhetischen Eindruck und reduziert andererseits die Materialbelastung des Verdeckbezugs erheblich.

Zweckmäßig ist das wenigstens eine Aussteifungselement aus Moosgummi, Filz bzw. aus Kunststoff ausgebildet. Als Moosgummi wird oft besonders feinporiger und elastischer Schaumstoff bezeichnet, wobei Moosgummi eine Gruppe in der Kategorie der Kunststoffe darstellt. Kunststoffe lassen sich heutzutage allgemein kostengünstig und mit nahezu beliebigen Materialeigenschaften herstellen und zeichnen sich darüber hinaus durch ein vergleichsweise geringes Eigengewicht aus, wodurch sie insbesondere für einen Einsatz im Sportwagenbau prädestiniert sind. Denkbar sind hierbei aber auch andere Materialien für Aussteifungselemente, insbesondere Naturmaterialien, welche einerseits dieselbe Aufgabe, nämlich die Vermeidung einer zu harten Knickschärfe, lösen und andererseits eine Ökologiebilanz des mit dem erfindungsgemäßen Verdeck ausgestatteten Kraftfahrzeugs verbessern.

Bei einer weiteren vorteilhaften Ausführungsform der erfindungsgemäßen Lösung ist das wenigstens eine Aussteifungselement vollflächig mit dem Verdeckbezug verbunden, insbesondere verklebt. Hierbei wird das wenigstens eine Aussteifungselement vorzugsweise von einer Innenseite am Verdeckbezug angeordnet und in einem weiteren Fertigungsschritt von einem, den Innenhimmel des Verdeckbezugs bildenden Überzug überdeckt, so dass das Aussteifungselement später nicht sichtbar zwischen dem Innenhimmel und dem Verdeckbezug angeordnet ist. Ein vollflächiges Verbinden des Aussteifungselementes mit dem Verdeckbezug, was vorzugsweise durch eine Verklebung oder eine Verschweißung, erfolgen kann, gewährleistet die Bildung des erforderlichen Mindestradiuses beim Ablegen des Verdecks. Darüber hinaus ist durch das vollflächige Verbinden ein teilweises Lösen des Aussteifungselementes vom Verdeckbezug ausgeschlossen, so dass der Verdeckbezug zusammen mit dem wenigstens einen Aussteifungselement als Einheit betrachtet werden kann.

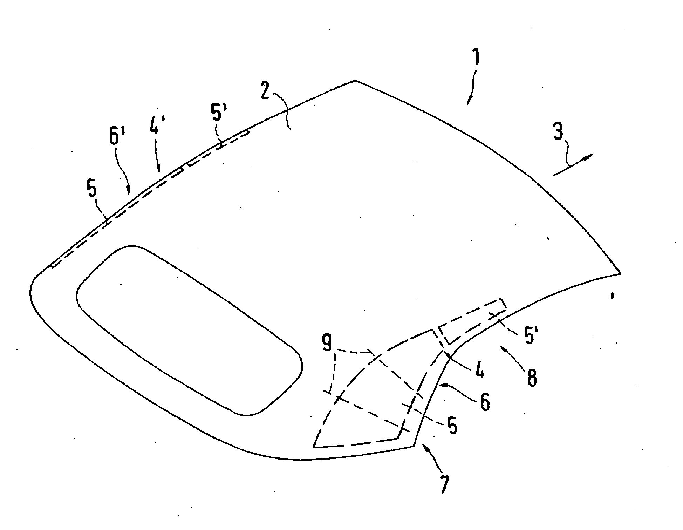

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

Die einzige Zeichnung zeigt eine schematisierte Ansicht auf eine mögliche Ausführungsform eines erfindungsgemäßen Verdecks mit seitlichen Aussteifungselementen.

Entsprechend der Zeichnung weist ein erfindungsgemäßes Verdeck 1 für ein im übrigen nicht dargestelltes Cabriolet einen flexiblen Verdeckbezug 2 auf, welcher üblicherweise wasserabweisend ausgebildet ist und dadurch bei geschlossenem Verdeck 1 den Fahrgastraum des Cabriolets vor äußeren Witterungseinflüssen schützt. In der Zeichnung ist dabei das Verdeck 1 in geschlossenem Zustand gezeigt, in welchem es den Fahrgastraum überspannt. Wie für ein Verdeck üblich, kann es auch geöffnet werden und im gefalteten Zustand in einer Ablageposition abgelegt werden. Die Öffnungs- bzw. Schließbewegung des Verdecks 1 wird dabei von einer nicht gezeigten Verdeckmechanik, insbesondere von einem Verdeckgestänge, bewirkt.

Das Verdeck 1 weist zwei, im wesentlichen in Fahrzeuglängsrichtung 3 verlaufende Seitenbereiche 4 und 4' auf, an welchen jeweils wenigstens ein flächiges Aussteifungselement 5, hier jeweils zwei flächige Aussteifungselemente 5 und 5' angeordnet sind. Selbstverständlich können darüber hinaus noch weitere, nicht gezeigte Aussteifungselemente im jeweiligen Seitenbereich 4, 4' angeordnet sein. Erfindungsgemäß ist dabei das wenigstens eine Aussteifungselement 5, 5' in einem Faltbereich 6, 6' des Verdeckbezugs 2 angeordnet und wird bei geöffnetem Verdeck 1 gefaltet. Durch das bzw. die Aussteifungselemente 5, 5' wird eine Knickschärfe des Verdeckbezugs 2 begrenzt bzw. ein Mindestradius von Falten 9, welche bei geöffnetem Verdeck 1 vom Verdeckbezug 2 gebildet werden, gewährleistet. Durch den Umstand, dass das bzw. die Aussteifungselemente 5, 5' die zugehörige Falte 9 bei geöffnetem Verdeck 1 überdecken, wird der Verdeckbezug 2 in diesem Bereich deutlich weniger stark strapaziert bzw. beansprucht, wodurch seine Langlebigkeit erhöht werden kann. Zudem wird durch die Begrenzung der Knickschärfe auch ein sich Abzeichnen von Knickfalten im Verdeckbezug 2 vermieden, welche ansonsten über längere Zeit den ästhetischen Eindruck des Verdecks 1 bzw. des Cabriolets beeinträchtigen.

Wie der Zeichnung zu entnehmen ist, verläuft eine Haupterstreckung des wenigstens einen Aussteifungselementes 5, 5' in Fahrzeuglängsrichtung 3, so dass stets gewährleistet ist, dass das wenigstens eine Aussteifungselement 5, 5' bei geöffnetem Verdeck 1 zumindest eine Falte 9 überdeckt. Dabei ist das wenigstens eine Aussteifungselement 5, 5' vorzugsweise im Bereich einer C-Säule 7 und/oder im Bereich eines mittleren seitlichen Dachrahmens 8 des Cabriolets angeordnet, da insbesondere in diesen Bereichen üblicherweise eine besonders starke Faltenbildung beim Öffnen des Verdecks 1 auftritt. Zusätzlich zu der Begrenzung der Knickschärfe bzw. der Gewährleistung eines Mindestradiuses bei geöffnetem Verdeck 1 bewirken die Aussteifungselemente 5, 5', bei geschlossenem Verdeck durch eine Anpassung an die Krümmung des Verdeckbezugs 2 die Verstärkung einer durch den Verdeckbezug 2 gebildeten Außenkontur. Die Aussteifungselemente 5, 5' sind somit nicht nur bei geöffnetem Verdeck 1 von großem Vorteil, sondern auch bei geschlossenem Verdeck 1.

Wie in der Zeichnung gezeigt, sind an jedem Seitenbereich 4, 4' zwei jeweils in Fahrtzeuglängsrichtung 3 hintereinander angeordnete Aussteifungselemente 5, 5' vorgesehen, wobei sämtliche Aussteifungselemente 5, 5' zusammen üblicherweise mehr als 10 % der Fläche des gesamten Verdeckbezugs 2 einnehmen.

Um die vorher beschriebene Aufgabe, nämlich die Begrenzung der Knickschärfe und die Bildung eines Mindestradiuses bei abgelegtem Verdeck 1 einerseits und die Verstärkung der durch den Verdeckbezug 2 gebildeten Außenkontur bei geschlossenem Verdeck 1 andererseits erfüllen zu können, ist das wenigstens eine Aussteifungselement 5, 5' vollflächig mit dem Verdeckbezug 2 verbunden, insbesondere mit diesem verklebt. Denkbar sind auch andere Verbindungsarten, beispielsweise eine Verschweißung oder ein Vernähen. Dabei ist das wenigstens eine Aussteifungselement 5, 5' an einer Innenseite des Verdeckbezugs 2 angeordnet und daher von außen nicht sichtbar. Das da Verdeck 1 üblicherweise aus dem Verdeckbezug 2 und einem, dem Fahrgastraum zugewandten Innenhimmel gebildet ist, ist das wenigstens eine Aussteifungselement 5, 5' vorzugsweise zwischen dem Verdeckbezug 2 und dem Innenhimmel angeordnet, so dass es weder von außen noch vom Fahrgastraum aus sichtbar ist.

Generell ist das wenigstens eine Aussteifungselement 5, 5' vorzugsweise aus Kunststoff, insbesondere aus Moosgummi oder Filz, ausgebildet, wodurch dieses in jeder beliebigen Form und mit nahezu beliebigen Materialeigenschaften kostengünstig herzustellen ist. Denkbar sind darüber hinaus aber auch Aussteifungselemente 5, 5', welche aus Naturmaterialien ausgebildet sind und dadurch ebenfalls die gestellte Aufgabe bezüglich der Begrenzung der Knickschärfe erfüllen, darüber hinaus aber auch noch eine Ökologiebilanz des Cabriolets verbessern. Dabei kommen Aussteifungselemente 5, 5' mit einer Dicke von üblicherweise mehr als 1 mm, vorzugsweise mit einer Dicke von 3 mm zum Einsatz, so dass sich ein mechanischer Aufwand zur Bildung der Falten 9 beim Öffnen des Verdecks 1 im Vergleich zu herkömmlichen Verdecken erhöht und die Falten 9 des erfindungsgemäßen Verdecks automatisch einen größeren Radius aufweisen.

Generell soll die Anordnung der Aussteifungselemente 5, 5' gemäß der Zeichnung rein exemplarisch verstanden werden, so dass von der Erfindung auch eine andere Anordnung oder eine andere Form der Aussteifungselemerite 5, 5' mit umschlossen sein soll, sofern diese die gestellten Aufgaben, hinsichtlich der Begrenzung der Knickschärfe und der Bildung eines Mindestradiuses beim Falten des Verdecks 1 erfüllen.

## Patentansprüche

1. Verdeck (1) für ein Cabriolet, umfassend einen flexiblen Verdeckbezug (2), mit in einer aufgespannten Lage zumindest in Fahrzeuglängsrichtung (3) ausgerichteten Seitenbereichen (4, 4'), mit einer Verdeckmechanik, die den Verdeckbezug (2) bei geschlossenem Verdeck (1) spannt und bei geöffnetem Verdeck (1) in einer abgelegten Lage faltet, wobei jedem Seitenbereich (4, 4') jeweils wenigstens ein flächiges Aussteifungselement aus Kunststoff (5, 5') zugeordnet ist, das an einer Innenseite des Verdeckbezugs (2) angeordnet und vollflächig mit dem Verdeckbezug (2) verbunden ist, **dadurch gekennzeichnet, dass** das wenigstens eine flächige Aussteifungselement (5, 5') in einem Faltbereich (6) des Verdeckbezugs (2) angeordnet und bei geöffnetem Verdeck (1) gefaltet ist, dass eine Haupterstreckung des wenigstens einen Aussteifungselements (5, 5') in Fahrzeuglängsrichtung (3) verläuft und dass das zumindest eine Aussteifungselement (5, 5') bei geöffnetem Verdeck (1) eine Falte (9) überdeckt.

2. Verdeck nach Anspruch 1, **dadurch gekennzeichnet, dass** das wenigstens Aussteifungselement (5, 5') eine Dicke von mehr als 1 mm aufweist.

3. Verdeck nach einem der Ansprüche 1 oder 2, **dadurch gekennzeichnet, dass** das wenigstens eine Aussteifungselement (5, 5') im Bereich einer C-Säule (7) und/oder im Bereich eines mittleren seitlichen Dachrahmens (8) des Cabriolets angeordnet ist.

4. Verdeck nach einem der Ansprüche 1 bis 3, **dadurch gekennzeichnet, dass** an jedem Seitenbereich (4, 4') zwei in Fahrzeuglängsrichtung (3) hintereinander angeordnete Aussteifungselemente (5, 5') vorgesehen sind.

5. Verdeck nach einem der Ansprüche 1 bis 4, **dadurch gekennzeichnet, dass** sämtliche Aussteifungselemente (5, 5') zusammen mehr als 10% der Fläche des Verdeckbezugs (2) einnehmen.

6. Verdeck nach einem der Ansprüche 1 bis 5, **dadurch gekennzeichnet, dass** sich das wenigsten eine Aussteifungselement (5, 5') bei geschlossenem Verdeck (1) einer Krümmung des Verdecks (1) anpasst und eine gebildete Außenkontur des Verdeckbezugs (2) verstärkt.

7. Cabriolet mit einem Verdeck (1) nach einem der Ansprüche 1 bis 6.

## Claims

1. Convertible top (1) for a convertible, comprising a flexible convertible-top cloth (2), with side regions (4, 4') oriented at least in the longitudinal direction (3) of the vehicle in a stretched-out position, with a convertible-top mechanism which tensions the convertible-top cloth (2) when the convertible top (1) is closed and folds said convertible-top cloth in a put-away position when the convertible top (1) is open, wherein each side region (4, 4') is in each case assigned at least one planar plastics stiffening element (5, 5') which is arranged on an inner side of the convertible-top cloth (2) and is connected over the full surface area to the convertible-top cloth (2), **characterized in that** the at least one planar stiffening element (5, 5') is arranged in a folding region (6) of the convertible-top cloth (2) and is folded when the convertible top (1) is opened, **in that** a main extent of the at least one stiffening element (5, 5') runs in the longitudinal direction (3) of the vehicle, and **in that** the at least one stiffening element (5, 5') covers a fold (9) when the convertible top (1) is open.

2. Convertible top according to Claim 1, **characterized in that** the at least one stiffening element (5, 5') has a thickness of more than 1 mm.

3. Convertible top according to either of Claims 1 and 2, **characterized in that** the at least one stiffening element (5, 5') is arranged in the region of a C pillar (7) and/or in the region of a central lateral roof frame (8) of the convertible.

4. Convertible top according to one of Claims 1 to 3, **characterized in that** two stiffening elements (5, 5') arranged consecutively in the longitudinal direction (3) of the vehicle are provided on each side region (4, 4').

5. Convertible top according to one of Claims 1 to 4, **characterized in that** all of the stiffening elements (5, 5') together take up more than 10% of the surface of the convertible-top cloth (2).

6. Convertible top according to one of Claims 1 to 5, **characterized in that**, when the convertible top (1) is closed, the at least one stiffening element (5, 5') matches a curvature of the convertible top (1) and reinforces a formed outer contour of the convertible-top cloth (2).

7. Convertible with a convertible top (1) according to one of Claims 1 to 6.

## Revendications

1. Capote (1) pour un cabriolet, comprenant un revêtement de capote flexible (2), avec des régions latérales (4, 4') orientées au moins dans la direction longitudinale du véhicule (3) dans une position étendue, avec un mécanisme de capote qui tend le revêtement de capote (2) lorsque la capote (1) est fermée et qui le plie dans une position rangée lorsque la capote (1) est ouverte, au moins un élément de rigidification plat en plastique (5, 5') étant associé à chaque région latérale (4, 4'), lequel est disposé sur un côté interne du revêtement de capote (2) et est connecté sur toute la surface au revêtement de capote (2), **caractérisée en ce que** l'au moins un élément de rigidification plat (5, 5') est disposé dans une région de pli (6) du revêtement de capote (2) et est plié lorsque la capote (1) est ouverte, **en ce qu'**une étendue principale de l'au moins un élément de rigidification (5, 5') s'étend dans la direction longitudinale du véhicule (3) et **en ce que** l'au moins un élément de rigidification (5, 5') recouvre un pli (9) lorsque la capote (1) est ouverte.

2. Capote selon la revendication 1, **caractérisée en ce que** l'au moins un élément de rigidification (5, 5') présente une épaisseur de plus de 1 mm.

3. Capote selon l'une quelconque des revendications 1 ou 2, **caractérisée en ce que** l'au moins un élément de rigidification (5, 5') est disposé dans la région d'un montant C (7) et/ou dans la région d'un cadre de toit latéral central (8) du cabriolet.

4. Capote selon l'une quelconque des revendications 1 à 3, **caractérisée en ce que** deux éléments de rigidification (5, 5') sont disposés l'un derrière l'autre dans la direction longitudinale du véhicule (3) sur chaque région latérale (4, 4').

5. Capote selon l'une quelconque des revendications 1 à 4, **caractérisée en ce que** tous les éléments de rigidification (5, 5') occupent ensemble plus de 10 % de la surface du revêtement de capote (2).

6. Capote selon l'une quelconque des revendications 1 à 5, **caractérisée en ce que** l'au moins un élément de rigidification (5, 5'), lorsque la capote (1) est fermée, s'adapte à une courbure de la capote (1) et renforce un contour extérieur formé du revêtement de capote (2).

7. Cabriolet comprenant une capote (1) selon l'une quelconque des revendications 1 à 6.
